# EUROPEAN PATENT APPLICATION

(11) **EP 3 581 379 A1**
(43) Date of publication of application: **18.12.2019**
(21) Application number: 18206348.7
(22) Date of filing: 14.11.2018
(51) Int. Cl.: B33Y 30/00, B29C 64/232, B29C 64/245

(54) **THREE-DIMENSIONAL PRINTING DEVICE**

(30) Priority: 13.06.2018 CN 201810605201
(71) Applicant: XYZprinting, Inc., New Taipei City 22201 (TW); Kinpo Electronics, Inc., New Taipei City 22201 (TW)
(72) Inventor: LU, Kuan-Yi, 22201 New Taipei City (TW); CHEN, Chun-Jui, 22201 New Taipei City (TW); NI, Chih-Ming, 22201 New Taipei City (TW); HUANG, Chen-Fu, 22201 New Taipei City (TW); LEE, An-Hsiu, 22201 New Taipei City (TW); LIN, Tsai-Yi, 22201 New Taipei City (TW)
(74) Representative: Emde, Eric

(57) **Abstract**

A 3D printing device including a base (110), a gantry (120), a forming platform (140) movably assembled to the gantry, a tank (130), an adjustable platform (170), a driving module (150) and a control module (160) is provided. The gantry and the tank are respectively disposed on the base. The adjusting platform is disposed between the gantry and the forming platform or between the tank and the base. The driving module is connected to the forming platform and the gantry. The control module is electrically connected to the driving module to drive the forming platform to reciprocate along the gantry, so that the forming platform is moved into or out of the tank. Before 3D printing is performed, the control module moves the forming platform to lean against the tank through the driving module, so as to drive the adjustable platform to deform, and confirm consistency of contact surfaces of the forming platform and the tank.

## Description

### BACKGROUND

### Technical Field

The disclosure relates to a three-dimensional printing device.

### Description of Related Art

Along with rapid development of technology, different methods for constructing three-dimensional (3D) models by using additive manufacturing technology such as layer-by-layer model constructing, etc. have been developed. Generally, the additive manufacturing technology is to convert design data of a 3D model constructed by software of computer aided design (CAD), etc. into a plurality of continuously stacked thin (quasi two-dimensional (2D)) cross-section layers.

Many methods for forming a plurality of the thin cross-section layers have been developed. For example, photopolymer is used as a liquid forming material used by a 3D printing device, and by configuring a forming platform in the liquid forming material, and driving a light source to move along X-Y coordinates according to X-Y-Z coordinates constructed based on the design data of the 3D model to irradiate the liquid forming material, the liquid forming material may be cured to form a correct shape of the cross-section layer. Then, as the forming platform is gradually moved out of a tank filled with the liquid forming material along a Z-axis, the liquid forming material may be cured layer-by-layer and stacked to form a 3D object on the forming platform.

Therefore, whether corresponding positions between the forming platform and the tank meet required corresponding conditions becomes an important factor that affects the quality of the 3D printing objects. However, in the existing 3D printing device, either the user is not provided with a method for confirming the corresponding conditions before the 3D printing, or the user needs to confirm the corresponding conditions by using additional tools and complicated procedures, so that it is still unable to provide effective solutions to make the corresponding positions between the forming platform and the tank to meet the corresponding conditions.

### SUMMARY

The disclosure is directed to a 3D printing device, in which a forming platform and a tank are adapted to be corrected.

An embodiment of the disclosure provides a 3D printing device including a base, a gantry, a forming platform, a tank, an adjustable platform, a driving module and a control module. The gantry and the tank are respectively disposed on the base. The forming platform is movably assembled to the gantry. The adjusting platform is disposed between the gantry and the forming platform or disposed between the tank and the base. The driving module is connected to the forming platform and the gantry. The control module is electrically connected to the driving module. The control module drives the forming platform to reciprocate along the gantry through the driving module, so that the forming platform is moved into or out of the tank. Before the 3D printing device performs 3D printing, the control module moves the forming platform into the tank to lean against the tank through the driving module, so as to drive the adjustable platform to deform, and confirm consistency of contact surfaces of the forming platform and the tank.

Based on the above description, in the 3D printing device, through corresponding configuration of the forming platform, the tank and the adjusting platform, before the 3D printing is performed, the forming platform is first driven to lean against an inner bottom surface of the tank, and under the condition of continuous force exertion, the adjustable platform is driven to deform, such that a forming surface of the forming platform is kept in close contact with the inner bottom surface of the tank, so as to confirm consistency of contact surfaces of the forming platform and the tank. Therefore, it is avoided to form a gap between the forming platform and the tank or present a non-parallel relative inclination state there between to affect quality of the subsequent 3D printing.

In order to make the aforementioned and other features and advantages of the disclosure comprehensible, several exemplary embodiments accompanied with figures are described in detail below.

### BRIEF DESCRIPTION OF THE DRAWINGS

The accompanying drawings are included to provide a further understanding of the disclosure, and are incorporated in and constitute a part of this specification. The drawings illustrate embodiments of the disclosure and, together with the description, serve to explain the principles of the disclosure.
FIG. 1 is a schematic diagram of a three-dimensional (3D) printing device according to an embodiment of the disclosure.
FIG. 2 is a schematic diagram of the 3D printing device of FIG. 1 in another state.
FIG. 3 is a schematic diagram of a part of components of the 3D printing device of FIG. 1 in another viewing angle.
FIG. 4 is an electrical relationship diagram of related components of the 3D printing device.
FIG. 5 is a simple side view of the 3D printing device.
FIG. 6 is a simple side view of the 3D printing device in another state.
FIG. 7 is a flowchart illustrating a control method of a 3D printing device.
FIG. 8 is a schematic diagram of a driving voltage of a driving module of the 3D printing device.
FIG. 9 is a simple side view of a 3D printing device according to another embodiment of the disclosure.

### DESCRIPTION OF EMBODIMENTS

Reference will now be made in detail to the present preferred embodiments of the disclosure, examples of which are illustrated in the accompanying drawings. Wherever possible, the same reference numbers are used in the drawings and the description to refer to the same or like parts.

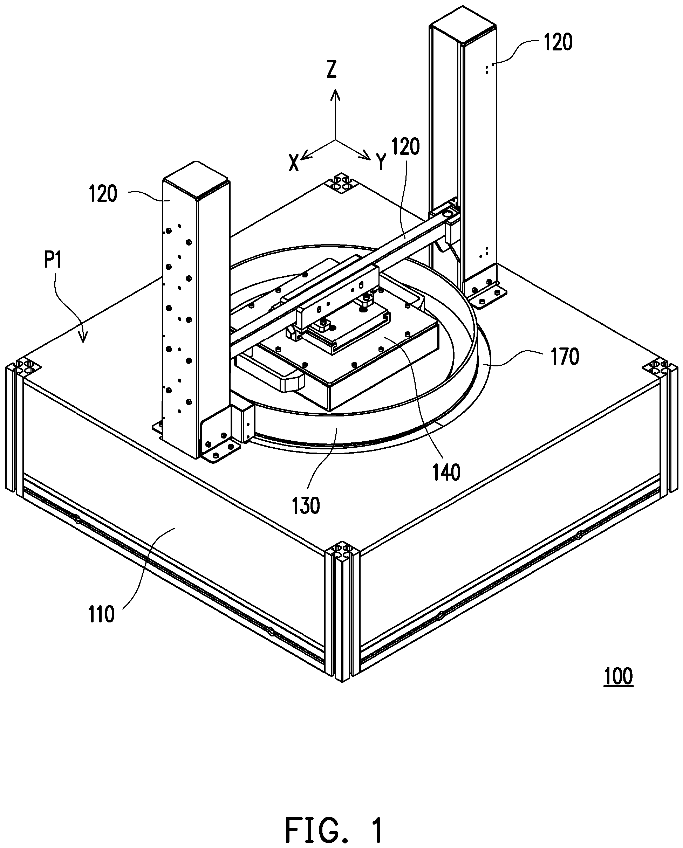

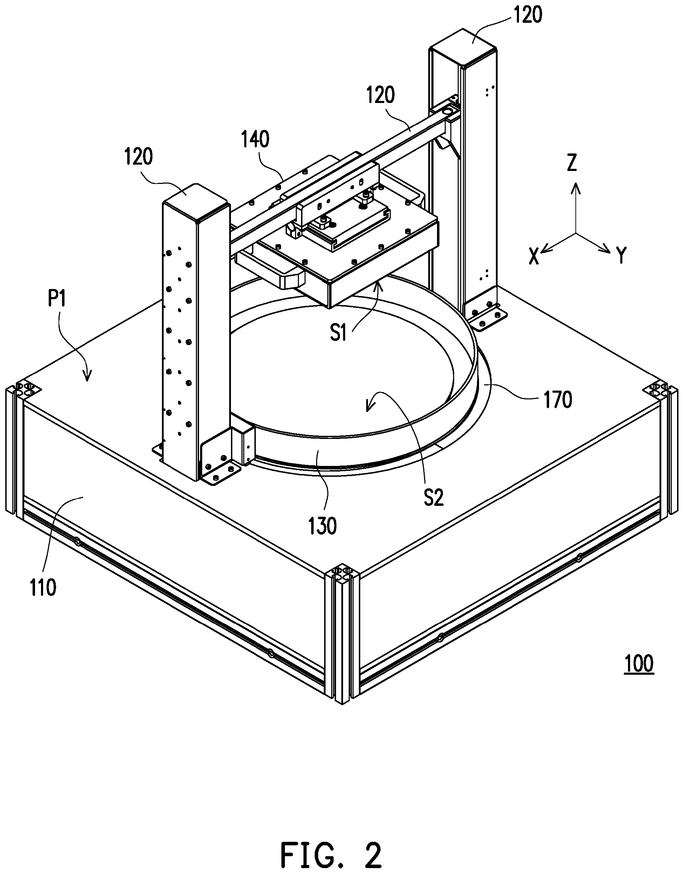

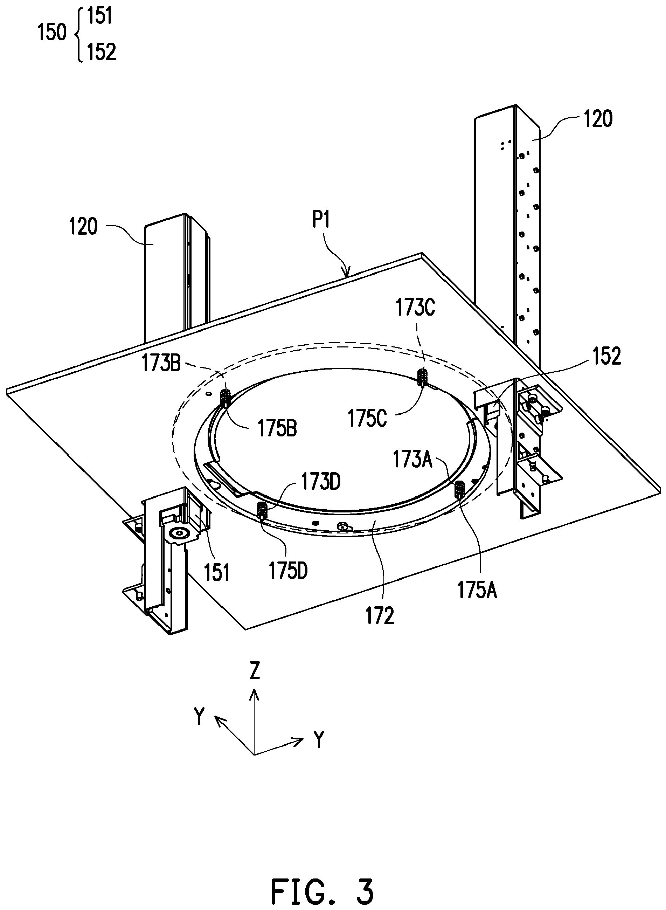

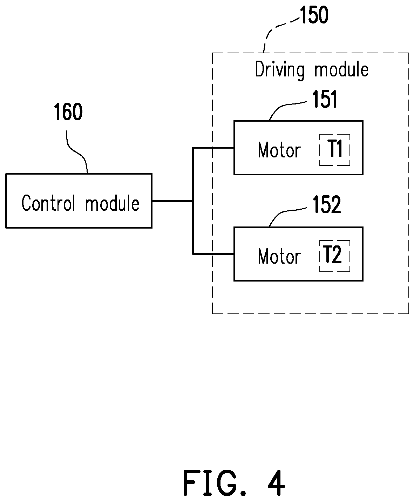

FIG. 1 is a schematic diagram of a three-dimensional (3D) printing device according to an embodiment of the disclosure. FIG. 2 is a schematic diagram of the 3D printing device of FIG. 1 in another state. FIG. 3 is a schematic diagram of a part of components of the 3D printing device of FIG. 1 in another viewing angle. FIG. 4 is an electrical relationship diagram of related components of the 3D printing device. Cartesian coordinates X-Y-Z are provided to facilitate describing the related components. Referring to FIG. 1 to FIG. 4, in the embodiment, the 3D printing device 100 is, for example, a stereolithography apparatus (SLA), and includes a base 110, a gantry 120, a tank 130, a forming platform 140, a driving module 150 and a control module 160. The gantry 120 is disposed on the base 110 and partially protrudes out of a surface PI, the driving module 150 is connected to the forming platform 140 and the gantry 120, the control module 160 is electrically connected to the driving module 150, and the forming platform 140 is movably assembled to the gantry 120 along a Z-axis through the driving module 150, i.e. the control module 160 may drive the forming platform 140 to reciprocate along the gantry 120 through the driving module 150, so that the forming platform 140 is moved into or out of the tank 130. The tank 130 is disposed on the base 110, and an adjustable platform 170 is disposed between the tank 130 and the base 110.

Moreover, in the 3D printing device 100, a curing light source (not shown) is disposed on a bottom of the tank 130, and the control module 160 drives the curing light source to provide curing light, and the curing light penetrates through the transparent bottom of the tank 130 to irradiate and cure a liquid forming material (not shown) in the tank 130. In other words, when the 3D printing device 100 performs 3D printing, the control module 160 controls and drives the forming platform 140 to move into the tank 130 to contact (or immerse into) the liquid forming material therein. Then, the control module 160 drives the curing light source to provide the curing light to irradiate and cure the liquid forming material of a specific position according to related digital information of a profile of a 3D object to be formed, so as to form a cured layer between a forming surface S1 of the forming platform 140 and an inner bottom surface S2 of the tank 130. Then, the cured layer is detached from the bottom of the tank 130 and is remained on the forming surface S1 of the forming platform 140. By repeating the above curing, detaching operations, and as the forming platform 140 is gradually moved away from the inner bottom surface S2 of the tank 130, a plurality of cured layers are gradually stacked on the forming surface S1 until completing the 3D object. It should be noted that the related 3D printing operation is only roughly described, and the other unmentioned content may be learned from the existing technology, which is not repeated.

In the embodiment, the driving module 150 includes a pair of motors 151 and 152, and the motors 151 and 152 respectively have stall warning units T1 and T2, where the stall warning units T1 and T2 are used for sensing driving voltages of the motors 151 and 152 and determining whether they are in a stall state. The control module 160 is electrically connected to the motors 151 and 152 and the stall warning units T1 and T2 thereof, and the control module 160 determines an approach of driving the forming platform 140 according to sensing and determining information of the stall warning units T1 and T2.

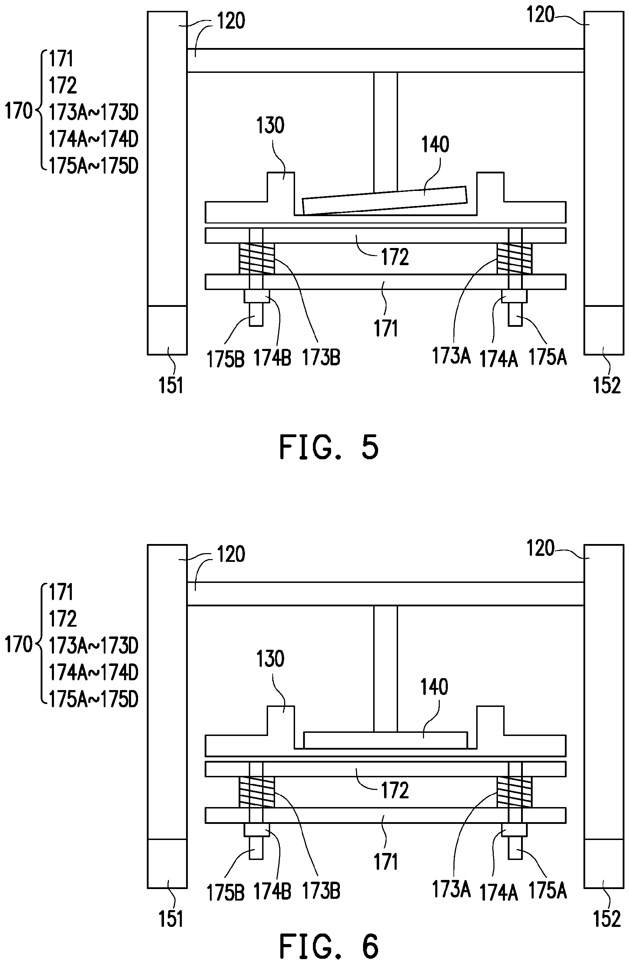

FIG. 5 is a simple side view of the 3D printing device. FIG. 6 is a simple side view of the 3D printing device in another state. Referring to FIG. 3, FIG. 5 and FIG. 6, the adjustable platform 170 of the embodiment includes a first plate 171, a second plate 172 and elastic members, where a plurality of elastic members 173A-173D are taken as an example for description, though the disclosure is not limited thereto. The first plate 171 is fixed on the base 110, the elastic members 173A-173D are respectively disposed on the first plate 171, the second plate 172 disposed above the first plate 171 through the elastic members 173A-173D in a floating manner, and the tank 130 is disposed on the second plate 172. Further, the adjustable platform 170 further includes rods 175A-175D, and lock members 174A-174D (corresponding to the number of the above elastic members 173A-173D), where the rods 175A-175D are disposed on the second plate 172 and penetrate through the elastic members 173A-173D and the first plate 171, and the lock members 174A-174D are located at one side of the first plate 171 back-facing the second plate 172 and are locked to the rods 175A-175D. The rods 175A-175D has threads, and the lock members 174A-174D are, for example, screw caps (or nuts) used for locking the first plate 177, the elastic members 173A-173D and the second plate 172 together. Namely, when the user looses the screw cap from the first plate 171, the tank 130 may present a floating state through the adjustable platform 170. In another embodiment that is not shown, the second plate 172 and the tank 130 construct an integral structure, which is equivalent to a situation that the tank 130 is directly assembled to and lean against the elastic members 173A-173D.

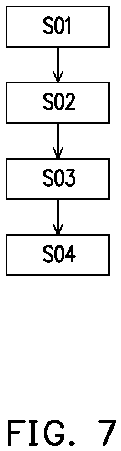

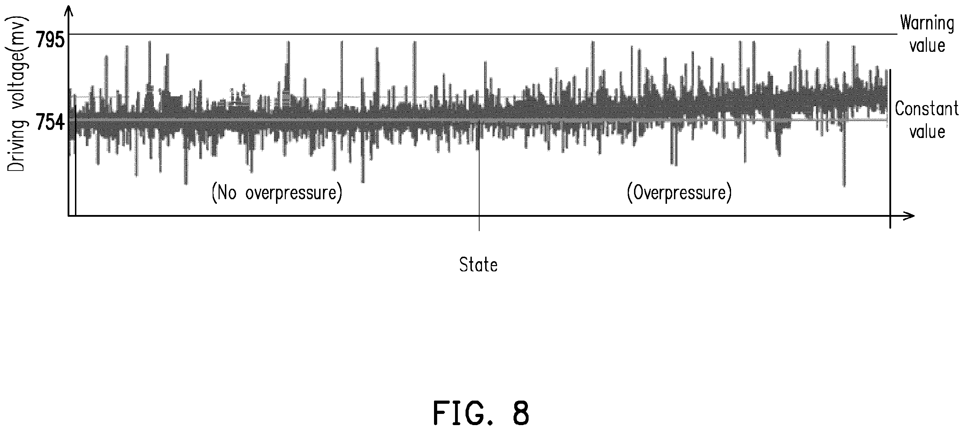

FIG. 7 is a flowchart illustrating a control method of a 3D printing device. FIG. 8 is a schematic diagram of a driving voltage of a driving module of the 3D printing device. Referring to FIG. 7, FIG. 8 and compared with FIG. 5 and FIG. 6, in the embodiment, the forming platform 140 and the tank 130 are required to present a consistent state with each other without relative inclination, so as to acquire better 3D printing quality in the 3D printing. The control method of the 3D printing device 100 includes: a step S01, by which the control module 160 drives the forming platform 140 to move into the tank 130 and lean against the tank 130, i.e. to contact the forming surface S1 of the forming platform 140 with the inner bottom surface S2 of the tank 130, as shown in FIG. 5, considering that the forming surface S1 of the forming platform 140 and the inner bottom surface S2 of the tank 130 are not in a parallel state in the beginning of contact, in step S02, the control module 160 continually drives the forming platform 140 to press down towards a negative Z-axis direction, and now a part of the forming platform 140 that has been contacted with the inner bottom surface S2 may drive and deform the adjustable platform 170, and a part of the forming platform 140 that has not been contacted with the inner bottom surface S2 may lean against the inner bottom surface S2 to reach the state shown in FIG. 6.

Namely, since the tank 130 of the embodiment is first disposed on the base 110 in the floating manner through the adjustable platform 170, during the process of the step S02, when the control module 160 controls the driving module 150 to drive the forming platform 140 to lean against the tank 130 and continually exert a press force, the tank 130 and the second plate 172 of the adjustable platform 170 are continuously moved down (towards the first plate 171), such that the elastic members 173A-173D are deformed. At the same time when the step S02 is executed, the control module 160 may also adjust the manner of driving the forming platform 140 according to the state of the motors 151 and 152 obtained by the stall warning units T1 and T2.

Further, according to the driving voltage variation of motor shown in FIG. 8, it is clearly known that when the motors 151 and 152 of the embodiment drive the forming platform 140 to move along the gantry 120 before leaning against the tank 130, an average of the driving voltage thereof is about 754 mv, which is defined as a constant value, and the driving voltage of the motors 151 and 152 reaching a stall state is 795 mv, which is defined as a warning value. Therefore, the control module 160 drives the forming platform 140 according to the range of 754 mv-795 mv. Namely, in the step S02, the control module 160 may control the driving module 150 to move down the forming platform 140 until the driving voltage of each of the motor 151 and 152 of the driving module 150 is between the aforementioned constant value and the warning value.

By executing the above step S02, an effect thereof is that the control module 160 may control the driving module 150 to move down the forming platform 140 to lean against the tank 130, and drive the adjustable platform 170 to deform, i.e. to make the adjustable platform 170 to be in an overpressure state, such that it is ensured that the forming surface S1 of the forming platform 140 and the inner bottom surface S2 of the tank 130 are closely attached without a gap, i.e. the contact surfaces (the forming surface S1 and the inner bottom surface S2) of the forming platform 140 and the tank 130 are in a consistent state. It should be noted that the driving voltage of the motor being between the constant value and the warning value represents that a part of the forming platform 140 driven by the motor 151 or 152 leans against the tank 130 to cause the adjustable platform 170 to be in the overpressure state, and the value ranges may be different along with different types of the motors 151 and 152, and different adjusting mechanisms of the forming platform 140, the tank 130 or the adjustable platform 170.

Then, in step S03, after the driving voltages of both of the motors 151 and 152 are confirmed to be between the constant value and the warning value, the lock members 174A-174D of the adjustable platform 170 are driven to lock the first plate 171, the elastic members 173A-173D and the second plate 172 together, i.e. to keep a deformation state of the adjustable platform 170 to ensure that the tank 130 and the forming platform 140 are still in the consistent state with each other. Finally, in step S04, the control module 160 may drive the 3D printing device 100 to perform the 3D printing operation, and due to execution of the aforementioned steps S01 to S03, during a process that the forming platform 140 is gradually away from the tank 130 to gradually stack cured layers to form a 3D object in the 3D printing operation, the forming surface S1 of the forming platform 140 is still in the state of parallel with the inner bottom surface S2 of the tank 130, so as to obtain better printing quality.

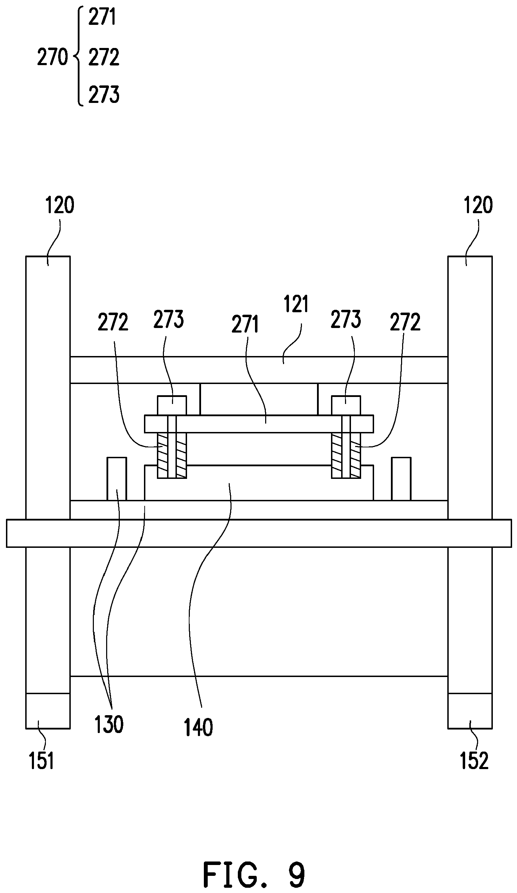

FIG. 9 is a simple side view of a 3D printing device according to another embodiment of the disclosure. Referring to FIG. 9, different to the aforementioned embodiment, in the 3D printing device of the embodiment, an adjustable platform 270 is disposed between the forming platform 140 and the gantry 120. Further, the adjustable platform 270 includes a plate 271, elastic members 272 and lock members 273, where the plate 271 is fixed on a crossbar 121 of the gantry 120, where the crossbar 121 is driven by the driving module 150 (the motors 151, 152) to move. The elastic members 272 are disposed between and lean against the plate 271 and the forming platform 140, such that the forming platform 140 is floated relative to the plate 271 through the elastic members 272.

The lock members 273 penetrate through the plate 271 and the elastic members 272 and are locked to the forming platform 140, and the lock members 273 are used for adjusting and fixing the states of the plate 271, the elastic members 272 and the forming platform 140.

In this way, when the control module 160 controls the driving module 150 to drive the forming platform 140 to lean against the tank 130, the adjustable platform 270 is also deformed, i.e. the forming platform 140 is moved towards the plate 271 and deforms the elastic members 272, by which the control module 160 may also control a leaning relationship between the forming platform 140 and the tank 130 to make the adjustable platform 270 to reach the required overpressure state according to the driving voltages sensed by the stall warning units T1, T2, and this part has been described in detail in the aforementioned embodiment, so that detail thereof is not repeated.

Moreover, it should be noted that the respective means of assembly and fixation (for example, the rods or lock members) of the embodiment of FIG. 9 and the aforementioned embodiments may be common to one another.

In summary, in the 3D printing device of the embodiments of the disclosure, through corresponding configuration of the forming platform, the tank and the adjusting platform, before the 3D printing is performed, the forming platform is first driven to lean against the inner bottom surface of the tank, and under the condition of continuous force exertion, the adjustable platform is driven to deform, such that the forming surface of the forming platform is kept in close contact with the inner bottom surface of the tank, so as to confirm consistency of contact surfaces of the forming platform and the tank. Therefore, it is avoided to form a gap between the forming platform and the tank or present a non-parallel relative inclination state there between to affect the quality of the subsequent 3D printing. Regardless of whether the adjustable platform is disposed between the gantry and the forming platform or disposed between the tank and the base, it may all deformed through mutual leaning of the forming platform and the tank, so that the control module may control a deformation degree of the adjustable platform according to the driving voltage of the driving module sensed by the stall warning units, and take the same as a control basis for an overpressure state of the forming platform and the tank.

## Claims

1. A three-dimensional printing device (10), comprising:
a base (110);
a gantry (120), disposed on the base (110);
a forming platform (140), movably assembled to the gantry (120);
a tank (130), disposed on the base (110);
an adjustable platform (170), disposed between the gantry (120) and the forming platform (140) or disposed between the tank (130) and the base (110);
a driving module (150), connected to the forming platform (140) and the gantry (120); and
a control module (160), electrically connected to the driving module (150), wherein the control module (160) drives the forming platform (140) to reciprocate along the gantry (120) through the driving module (150), so that the forming platform (140) is moved into or out of the tank (130), before the three-dimensional printing device (10) performs three-dimensional printing, the control module (160) moves the forming platform (140) into the tank (130) to lean against the tank (130) through the driving module (150), so as to drive the adjustable platform (170) to deform, and confirm consistency of contact surfaces of the forming platform (140) and the tank (130), wherein the driving module (150) comprises at least one motor (151 or/and 152), the motor (151 o 152) has a stall warning unit (T1 or T2) electrically connected to the control module (160), and the stall warning unit (T1 or T2) is configured to sense and determine a driving voltage of the motor (151 o 152), and the control module (160) drives the forming platform (140) according to sensing and determining information of the stall warning unit (T1 or T2).

2. The three-dimensional printing device (10) as claimed in claim 1, wherein the stall warning unit (T1 or T2) provides a warning value, and when the control module (160) drives the forming platform (140) to move but not lean against the tank (130) through the motor (151 o 152), the driving voltage of the motor (151 o 152) is a constant value, and when the control module (160) drives the forming platform (140) to move and lean against the tank (130) through the motor (151 o 152) to deform the adjustable platform (170), the driving voltage of the motor (151 o 152) is between the constant value and the warning value.

3. The three-dimensional printing device (10) as claimed in claim 1, wherein the adjustable platform (170) is disposed between the tank (130) and the base (110), and the adjustable platform (170) comprises:
a first plate (171), fixed to the base (110);
an elastic member (173A-173D), disposed on the first plate; (171) and
a second plate (172), disposed on the first plate (171) in a floating manner through the elastic member (173A-173D), wherein the tank (130) is disposed on the second plate (172), and when the adjustable platform (170) is deformed, the tank (130) and the second plate (172) move towards the first plate (171) and deform the elastic member (173A-173D).

4. The three-dimensional printing device (10) as claimed in claim 3, wherein the adjustable platform (170) further comprises a rod (175A-175D) and a lock member (174A-174D), wherein the rod (175A-175D) is disposed on the second plate (172) and penetrates through the elastic member (173A-173D) and the first plate (171), the lock member (174A-174D) is located at one side of the first plate (171) back-facing the second plate (172) and is locked to the rod (175A-175D), wherein the first plate (171), the elastic member (173A-173D) and the second plate (172) are adjusted and fixed in a state by the lock member (174A-174D).

5. The three-dimensional printing device (10) as claimed in claim 1, wherein the adjustable platform (270) is disposed between the gantry (120) and the forming platform (140), the gantry (120) has a crossbar (121) adapted to be driven by the driving module (150), and the adjustable platform (270) comprises:
a plate (271), fixed to the crossbar (121); and
an elastic member (272), disposed between and leaning against the plate (271) and the forming platform (140), and the forming platform (140) being floated relative to the plate (271) through the elastic member (272), wherein when the adjustable platform (270) is deformed, the forming platform (140) moves towards the plate (271) and deforms the elastic member (272).

6. The three-dimensional printing device (10) as claimed in claim 5, wherein the adjustable platform (270) further comprises a lock member (273), the lock member (273) penetrates through the plate (271) and the elastic member (272) and is locked to the forming platform (140), wherein the plate (271), the elastic member (272) and the forming platform (140) are adjusted and fixed in a state by the lock member (273).

7. The three-dimensional printing device (10) as claimed in claim 2, wherein the driving module (150) comprises a plurality of motors (151, 152), each of the motors (151, 152) has the stall warning unit (T1, T2) electrically coupled to the control module (160), and when driving voltages respectively generated by each of the motors (151, 152) are all between the constant value and the warning value, the three-dimensional printing device (10) performs the three-dimensional printing.
